# EUROPÄISCHE PATENTSCHRIFT

(11) **EP 1 045 158 B1**
(45) Veröffentlichungstag und Bekanntmachung des Hinweises auf die Patenterteilung: **25.02.2004**
(21) Anmeldenummer: 99106580.6
(22) Anmeldetag: 31.03.1999
(51) Int. Cl.: F16C 29/06, B23Q 1/40, B23Q 5/26

(54) **Schlitten-Antriebsvorrichtung**
Slide drive
Entraînement d'un chariot

(43) Veröffentlichungstag der Anmeldung: 18.10.2000
(73) Patentinhaber: Festo AG & Co, 73734 Esslingen (DE)
(72) Erfinder: Merz, Heiko, 71364 Winnenden (DE); Mödinger, Uwe, 73249 Wernau (DE)
(74) Vertreter: Abel, Martin, Dipl.-Ing.

(56) Entgegenhaltungen:
- EP-A- 0 293 648
- EP-A- 0 592 195
- DE-A- 4 343 672
- JP-A- 9 144 755
- US-A- 4 756 762

## Beschreibung

Die Erfindung betrifft eine Schlitten-Antriebsvorrichtung, mit einem Vorrichtungsgehäuse, in dem sich mindestens ein zu einer Linearbewegung antreibbares Betätigungselement befindet, das mit einem Schlitten bewegungsgekoppelt ist, der an der Außenseite des Vorrichtungsgehäuses unter Mitwirkung von Wälzelementen relativ zum Vorrichtungsgehäuse verschiebbar geführt ist.

Eine Schlitten-Antriebsvorrichtung dieser Art geht beispielsweise aus dem deutschen Gebrauchsmuster Nr. 29706098.8 hervor. Dort ist mittig an der Oberseite des im Querschnitt rechteckförmigen Vorrichtungsgehäuses eine erste Führungsschiene befestigt, die von zweiten Führungsschienen flankiert wird, die an einem relativ zum Vorrichtungsgehäuse verschiebbaren Schlitten befestigt sind. Zwischen benachbarten Führungsschienen befinden sich kugelartige Wälzelemente, die an von den Führungsschienen definierten Laufbahnen abrollen, wenn der Schlitten durch Aktivierung des Betätigungselementes zu einer Linearbewegung bezüglich des Vorrichtungsgehäuses veranlaßt wird.

Mit der bekannten Schlitten-Antriebsvorrichtung läßt sich eine bestimmte Baugröße nicht unterschreiten. Bedingt durch die zahlreich erforderlichen Verbindungsmaßnahmen zwischen den Führungsschienen und dem jeweils zugeordneten Bauteil kann bei Unterschreiten gewisser Minimalabmessungen die erforderliche Festigkeit nicht mehr gewährleistet werden, ganz abgesehen von den mit einer Miniaturisierung verbundenen Handhabungsproblemen bei der Montage der Vorrichtung.

Es ist die Aufgabe der vorliegenden Erfindung, eine Schlitten-Antriebsvorrichtung zu schaffen, die auch bei kleinster Baugröße noch verhältnismäßig einfach montierbar ist und die notwendigen Festigkeitsanforderungen erfüllt.

Zur Lösung dieser Aufgabe ist vorgesehen, daß die Laufbahnen für die Wälzelemente integraler Bestandteil des Vorrichtungsgehäuses und des Schlittens sind, wobei sowohl das Vorrichtungsgehäuse als auch der Schlitten zumindest im Bereich der mit den Wälzelementen in Kontakt stehenden Laufbahnen über eine Mindest-Materialhärte von 38 HRC (Rockwell-C-Härte) verfügen.

Auf diese Weise ergibt sich eine Bauform, bei der eine Wälzführung zwischen dem Vorrichtungsgehäuse und dem Schlitten ohne separate Führungsschienen realisierbar ist.

Die Laufbahnen für die Wälzelemente sind unmittelbarer Bestandteil des Vorrichtungsgehäuses und des Schlittens, können also bei der Herstellung dieser Bestandteile direkt berücksichtigt werden und erfordern keine nachträgliche Befestigung durch Schrauben oder sonstige Befestigungsmittel. In diesem Zusammenhang hat sich erwiesen, daß das Material des Vorrichtungsgehäuses und des Schlittens zumindest im Bereich der Laufbahnen derart ausgebildet sein sollte, daß es über eine Härte von mindestens 38 HRC verfügt (nach Rockwell in Verbindung mit einem kegeligen Eindringkörper gemessene Härte), so daß die beim Einsatz der Vorrichtung zwischen den Laufbahnen wirkenden Querkräfte sicher aufgenommen werden, ohne einen zu raschen Verschleiß hervorzurufen, was insgesamt eine lange Lebensdauer gewährleistet. Die verwendeten Wälzelemente verfügen. vorzugsweise über die gleiche Mindesthärte, wobeies allerdings zweckmäßig ist, die Härte der Wälzelemente etwas geringer als diejenige der Laufbahnen zu wählen, so daß ein eventuell doch auftretender Verschleiß zuerst an den Wälzelementen auftritt, die sich kostengünstiger ersetzen lassen als die die Laufflächen aufweisenden Bestandteile der Vorrichtung. Insgesamt läßt sich mit der erfindungsgemäßen Schlitten-Antriebsvorrichtung ohne Beeinträchtigung der Funktionsfähigkeit eine extreme Miniaturisierung erreichen, so daß man im Extremfall von einer Mikro-Schlitten-Antriebsvorrichtung sprechen könnte, wobei praktisch das Vorrichtungsgehäuse die beim Stand der Technik von der zentralen Führungsschiene erfüllte Funktion mitübernimmt.

Vorteilhafte Weiterbildungen der Erfindung gehen aus den Unteransprüchen hervor.

Zweckmäßigerweise verfügen das Vorrichtungsgehäuse und/oder der Schlitten insgesamt, zumindest jedoch in ihren sich maximal axial überlappenden Längenabschnitten, über ihren gesamten Querschnitt hinweg über die Mindest-Materialhärte.

Zumindest im Bereich der Laufbahnen können das Vorrichtungsgehäuse und/oder der Schlitten aus gehärtetem Metallmaterial bestehen. Die erforderliche Härte kann beispielsweise durch sogenanntes Einsatzhärten bzw. Oberflächenhärten erzielt werden, zum Beispiel durch Anwendung eines Induktionshärtungsverfahrens.

Als besonders vorteilhaft wird eine Bauform angesehen, bei der zumindest die die Laufbahnen bildenden Bestandteile des Vorrichtungsgehäuses und/oder des Schlittens aus nichtrostendem Stahlmaterial bestehen, wobei zweckmäßigerweise auf ferritisches oder martensitisches Stahlmaterial zurückgegriffen wird, insbesondere mit einem Kohlenstoffanteil von mindestens 0,4 Gew.%. In diesem Zusammenhang hat sich herausgestellt, daß bei Verwendung der Stahlsorte X46 Cr13 besonders gute Ergebnisse erzielt werden.

Vorzugsweise wird die Materialhärte des Vorrichtungsgehäuses und des Schlittens zumindest im Bereich der Laufbahnen zwischen 45 HRC und 60 HRC (je einschließlich) gewählt, wobei derzeit als optimaler Wert eine Härte von 54 HRC angesehen wird.

Zum Erhalt kompakter Querabmessungen, verbunden mit einer optimalen Querabstützung zwischen Schlitten und Vorrichtungsgehäuse,ist eine Bauform zu empfehlen, bei der der Schlitten das Vorrichtungsgehäuse mit einem einen U-ähnlichen Querschnitt aufweisenden Führungsabschnitt übergreift, wobei an den einander zugewandten inneren Flanken der Schenkel des Führungsabschnittes erste Laufbahnen vorgesehen sind, denen jeweils eine am übergriffenen Abschnitt des Vorrichtungsgehäuses vorgesehene zweite Laufbahn gegenüberliegt, wobei zwischen zugeordneten Paaren erster und zweiter Laufbahnen die Wälzelemente angeordnet sind. Die Laufbahnen sind dabei vorzugsweise zumindest teilweise von den Innenflächen von Längsnuten gebildet, die in das Vorrichtungsgehäuse und/oder den Schlitten eingebracht sind.

Die Schlitten-Antriebsvorrichtung kann sowohl in elektrisch betätigter Bauart als auch in fluidbetätigter Bauart ausgeführt sein. Dabei kann das mit dem Schlitten bewegungsgekoppelte Betätigungselement unmittelbar in einer Bohrung des Vorrichtungsgehäuses verschiebbar geführt sein. Vor allem bei sehr kleinen Baugrößen empfiehlt sich jedoch eine Realisierung in der Weise, daß das Betätigungselement Bestandteil einer separat funktionsfähigen Betätigungseinheit ist, die patronenähnlich lediglich in eine sich im Vorrichtungsgehäuse erstreckende Aufnahme eingesetzt ist. Auf diese Weise kann die Betätigungseinheit separat gefertigt werden und ist zur Endmontage der Schlitten-Antriebsvorrichtung nur noch in der Aufnahme zu fixieren.

Ein weiterer damit verbundener Vorteil läßt sich dann erzielen, wenn das Gehäuse der Betätigungseinheit in unterschiedlichen axialen Relativpositionen mit Bezug zum Vorrichtungsgehäuse festlegbar ist. Es läßt sich dann bei zumindest einer Hubrichtung des Betätigungselements dessen Endlage variabel und anwendungsspezifisch vorgeben.

Eine besonders einfache Einstellmöglichkeit ergibt sich, wenn das Gehäuse derart mit dem Vorrichtungsgehäuse in Schraubeingriff steht, daß durch ein Verdrehen des Gehäuses der Betätigungseinheit eine Veränderung der Axialposition bezüglich des Vorrichtungsgehäuses einhergeht.

Vor allem bei sehr kleinen Baugrößen erweist sich eine Gestaltung des Vorrichtungsgehäuses als vorteilhaft, bei der dieses einen trapezähnlich gestalteten Fußabschnitt und einen dem Schlitten zugeordneten, im Querschnitt rechteckähnlich gestalteten Rückenabschnitt aufweist. Dies ermöglicht im Bereich des Rückenabschnittes trotz der dort vorhandenen Führungsmaßnahmen kompakte Querabmessungen, wobei gleichzeitig durch den sich ausgehend von dem Rückenabschnitt verbreiternden Fußabschnitt eine ausreichende Breite zur Verfügung steht, um die Schlitten-Antriebsvorrichtung sicher an einer Tragstruktur abzustützen und zu fixieren.

Nachfolgend wird die Erfindung anhand der beiliegenden Zeichnung näher erläutert. In dieser zeigen:
- Fig. 1: eine erste Bauform der erfindungsgemäßen Schlitten-Antriebsvorrichtung im Längsschnitt gemäß Schnittlinie I-I aus Fig. 3, wobei die in das Vorrichtungsgehäuse eingesetzte Betätigungseinheit ungeschnitten dargestellt ist,
- Fig. 2: eine im Vergleich zur Fig. 1 abgewandelte Bauform der Schlitten-Antriesvorrichtung in vergleichbarer Darstellungsweise und
- Fig. 3: einen Querschnitt durch die Schlitten-Antriebsvorrichtungen der Fig. 1 und 2 gemäß Schnittlinien III-III.

Die in der Zeichnung abgebildeten und allgemein mit Bezugsziffer 1 bezeichneten Schlitten-Antriebsvorrichtungen verfügen jeweils über ein längliches, aus Metall bestehendes Vorrichtungsgehäuse 2, das von einer zweckmäßigerweise zylindrisch konturierten Aufnahme 3 in Längsrichtung durchsetzt wird.

In die Aufnahme 3 ist patronenartig eine Betätigungseinheit 4 eingesetzt, wobei ein beim Ausführungsbeispiel stangenförmiges Abtriebsteil 5 der Betätigungseinheit 4 an einer nachfolgend als Vorderseite bezeichneten axialen Stirnseite des Vorrichtungsgehäuses 2 herausragt.

Das Abtriebsteil 5 steht mit einem Betätigungselement 6 in Antriebsverbindung, das im Innern des Gehäuses 7 der Betätigungseinheit 4 axial verschiebbar angeordnet ist.

Das Betätigungselement 6 ist über das Abtriebsteil 5 mit einem außerhalb des Vorrichtungsgehäuses 2 angeordneten Schlitten 8 in axialer Richtung bewegungsgekoppelt. Dieser Schlitten 8 ist an der Außenseite des Vorrichtungsgehäuses 2 unter Mitwirkung von Wälzelementen 12 relativ zum Vorrichtungsgehäuse 2 in Richtung dessen Längsachse 13 verschiebbar geführt und zugleich in Querrichtung unbeweglich abgestützt.

Durch Aktivierung der Betätigungseinheit 4 läßt sich das Betätigungselement 6 zu einer alternierenden Linearbewegung veranlassen, die über das Abtriebsteil 5 auf den Schlitten 8 übertragen wird, so daß dieser synchron mitbewegt wird. Auf diese Weise läßt sich beispielsweise ein an beliebiger Stelle der Bewegungseinheit festgelegtes Bauteil verlagern und positionieren, beispielsweise innerhalb einer Maschine oder einer Handhabungseinrichtung. Die Befestigung des zu bewegenden Bauteils erfolgt dabei vorzugsweise an dem Schlitten 8, der zu diesem Zweck über geeignete Befestigungsmittel 11 verfügt.

Durch die zwischen dem Schlitten 8 und dem Vorrichtungsgehäuse 2 realisierte Linearführung werden Querbelastungen von der Betätigungseinheit 4 zumindest weitestgehend ferngehalten, so daß ein sehr verschleißarmer Betrieb möglich ist.

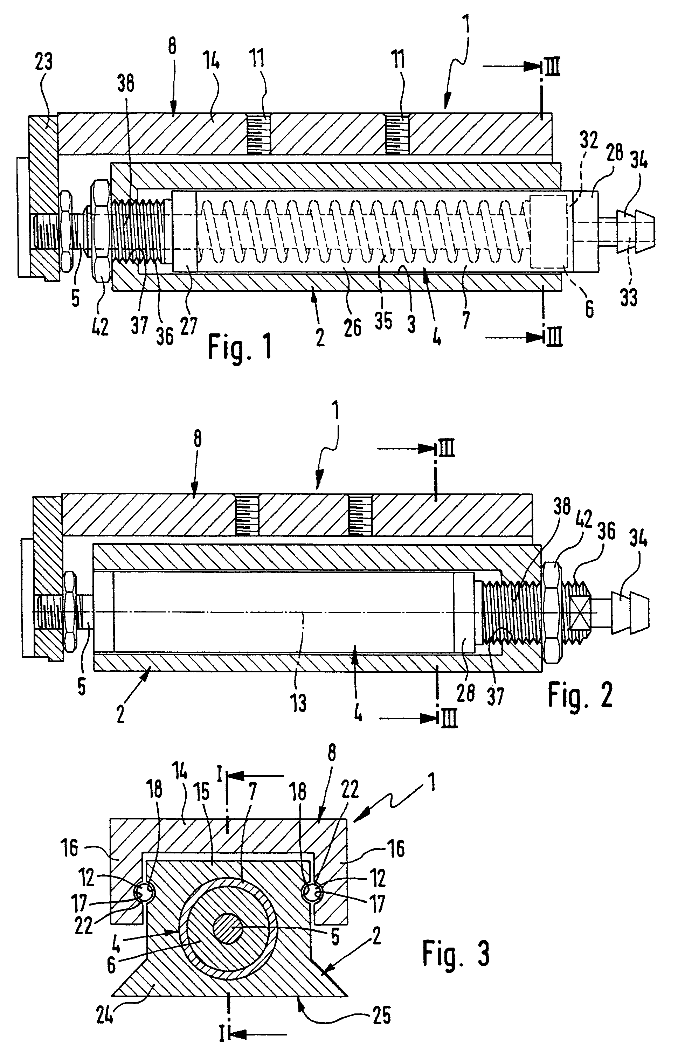

Eine bevorzugte Querschnittsform der Schlitten-Antriebsvorrichtung 1 geht aus Fig. 3 hervor. Demnach verfügt der Schlitten 8 über einen einen U-ähnlichen Querschnitt aufweisenden Führungsabschnitt 14, der das Vorrichtungsgehäuse 2 längsseits flankiert und einen Rückenabschnitt 15 des Vorrichtungsgehäuses 2 reiterähnlich übergreift. Der Rückenabschnitt 15 hat zweckmäßigerweise einen rechteckähnlichen Querschnitt.

An den einander zugewandten Flanken der beiden seitlichen, längsverlaufenden Schenkel 16 des Führungsabschnittes 14 befindet sich jeweils eine sich parallel zur Längsachse 13 erstreckende erste Laufbahn 17. Jeder dieser ersten Laufbahnen 17 liegt eine an der zugewandten Seitenfläche des Rückenabschnittes 15 vorgesehene zweite Laufbahn 18 gegenüber, die sich mit Abstand parallel zur zugeordneten ersten Laufbahn 17 erstreckt. Zwischen den beiden Paaren erster und zweiter Laufbahnen 17, 18 ist jeweils eine Mehrzahl vorzugsweise kugelförmiger Wälzelemente 12 angeordnet, die jeweils gleichzeitig an jeder der beiden zugeordneten Laufbahnen 17, 18 anliegen. Dabei begrenzt ein jeweiliges Paar erster und zweiter Laufbahnen 17, 18 einen kanalähnlichen Zwischenraum, der als Führungskanal 22 bezeichnet sei und der die Wälzelemente 12 aufnimmt.

Die Länge des Führungskanals 22 variiert in Abhängigkeit von der Länge, über die sich der Führungsabschnitt 14 und das Vorrichtungsgehäuse 2 axial überlappen, wobei der überlappungsgrad von der momentanen Axialposition des Betätigungselementes 7 vorgegeben wird. Er ist um so geringer, je weiter das Abtriebsteil 5 stirnseitig aus dem Vorrichtungsgehäuse 2 ausgefahren ist. Nicht näher dargestellte Haltemittel, beispielsweise in Käfigbauart, fixieren die regelmäßig in jedem Führungskanal 22 vorhandene Mehrzahl aufeinanderfolgend angeordneter Wälzelemente 12 in ihrer Relativposition. Außerdem sind nicht näher dargestellte Anschlagmittel vorhanden, die verhindern, daß die Wälzelemente 12 aus den Führungskanälen 22 stirnseitig austreten können. Bei der Relativbewegung zwischen Schlitten 8 und Vorrichtungsgehäuse 2 wälzen sich die Wälzelemente 12 gleichzeitig an den beiden jeweils zugeordneten ersten und zweiten Laufbahnen 17, 18 ab.

Die Schlitten-Antriebsvorrichtung zeichnet sich nun weiter dadurch aus, daß die ersten und zweiten Laufbahnen 17, 18 integraler Bestandteil des sie aufweisenden Schlittens 8 bzw. Vorrichtungsgehäuses 2 sind. Dabei können sie gemäß Fig. 3 zumindest teilweise von den Innenflächen insbesondere konkav gekrümmter Längsnuten gebildet sein, die in die Außenfläche des Schlittens 8 bzw. des Vorrichtungsgehäuses 2 eingearbeitet sind.

Durch die einstückige Ausbildung wird unter anderem erreicht, daß sich die Laufbahnen 17, 18 unmittelbar bei der Fertigung des Schlittens 8 und des Vorrichtungsgehäuses 2 ausbilden lassen, so daß sich eine nachträgliche Montage separater, die Laufflächen enthaltender Führungsschienen erübrigt. Auch auf ein umständliches Einlegen spezieller Laufbahnteile in geeignete Nuten des Schlittens 8 oder des Vorrichtungsgehäuses 2 kann verzichtet werden. Auf diese Weise läßt sich die Herstellung und vor allem auch die Montage der Schlitten-Antriebsvorrichtung 1 beträchtlich vereinfachen, insbesondere dann, wenn sie über eine nur geringe Baugröße verfügt, beispielsweise mit Baulängen in der Größenordnung von 6 cm und Querabmessungen in der Größenordnung von 1 - 2 cm.

Hinzu kommt, daß der Schlitten 8 und das Vorrichtungsgehäuse 2 zumindest im Bereich der Laufbahnen 17, 18 über eine Mindest-Materialhärte von 38 HRC verfügen, wobei "HRC" für das Rockwell-C-Härteprüfverfahren steht. Es hat sich erwiesen, daß die integrale Ausführung der Laufbahnen 17, 18 und des Schlittens 8 bzw. des Vorrichtungsgehäuses 2 in Verbindung mit einer Laufbahn-Härte von mindestens 38 HRC eine Antriebsvorrichtung mit optimalen Funktionseigenschaften ergibt.

Um die notwendige Mindest-Materialhärte zu erreichen, könnte auf ein härtbares Stahlmaterial zurückgegriffen werden, das lediglich im Bereich der Laufbahnen 17, 18 lokal gehärtet wird, beispielsweise durch Induktionshärtung. Gerade bei einer Miniatur-Bauweise ist es allerdings fertigungstechnisch günstiger, wenn Schlitten 8 und Vorrichtungsgehäuse 2, zumindest in ihren zur Definition der Führungskanäle 22 beitragenden, sich maximal axial überlappenden Längenabschnitten, über den gesamten Querschnitt über die vorerwähnte Mindest-Materialhärte verfügen. Es kann dann insbesondere vorgesehen sein, daß das komplette Vorrichtungsgehäuse 2 und der komplette Schlitten 8 aus einem die Mindest-Materialhärte von 38 HRC aufweisenden Metallmaterial bestehen. Dies ist bei den Ausführungsbeispielen der Fall.

Bei den Ausführungsbeispielen ist im einzelnen vorgesehen, daß das Vorrichtungsgehäuse 2 und der Schlitten 8 aus nichtrostendem Stahlmaterial bestehen, wobei zweckmäßigerweise ferritischer und/oder martensitischer Stahl verwendet wird, der über einen Kohlenstoffanteil zwischen, je einschließlich, 0,4 und 0,5 Gew.% verfügt. Besonders geeignet in diesem Zusammenhang ist die Stahlsorte X46 Cr13, die in der Regel über eine Rockwell-Härte von 54 verfügt, wobei aber insgesamt eine Härte im Bereich zwischen, je einschließlich, 45 HRC und 60 HRC als besonders empfehlenswert angegeben werden kann.

Ist der Schlitten 8 wie beim Ausführungsbeispiel mehrteilig ausgeführt und verfügt über einen die ersten Laufbahnen 17 aufweisenden Führungsabschnitt 14, der über ein separates, beispielsweise plattenartiges Verbindungselement 23 am vorderen Ende des Abtriebsteils 5 festgelegt ist, kann aus Kostengründen auch eine Bauform vorgesehen werden, bei der nur der Führungsabschnitt 14 zumindest im Bereich der ersten Laufbahnen 17 und vorzugsweise in seiner Gesamtheit die oben erwähnte Mindest-Materialhärte aufweist, während das Verbindungselement 23 aus einem beliebigen anderen Material bestehen kann.

Zurückkommend auf die Fig. 3, ist ersichtlich, daß das Vorrichtungsgehäuse 2 im Querschnitt so ausgeführt sein kann, daß es im Anschluß an den Rückenabschnitt 15 über einen trapezähnlich gestalteten Fußabschnitt 24 verfügt, indem sich seine Baubreite mit zunehmender Entfernung vom Rückenabschnitt 15 vergrößert, so daß die Unterseite des Vorrichtungsgehäuses 2 eine Montagefläche 25 relativ großer Breite definiert, die eine stabile Befestigung der Schlitten-Antriebsvorrichtung 1 an einer nicht näher dargestellten Tragstruktur ermöglicht.

Die Querschnittsabmessungen können insbesondere so ausgelegt sein, daß die größte Breite des Fußabschnittes 24 etwa der Breite des Führungsabschnittes 14 des Schlittens 8 entspricht.

Die Schlitten-Antriebsvorrichtungen des Ausführungsbeispiels sind in fluidbetätigter Bauart ausgeführt, wobei die Linearbewegung des Betätigungselementes 6 durch Fluidkraft und vorzugsweise pneumatisch hervorgerufen wird. In diesem Zusammenhang ist die Betätigungseinheit 4 nach Art eines fluidbetätigten Arbeitszylinders ausgebildet, wobei ihr Gehäuse 7 ein rohrförmiges Mittelteil 26 aufweist, das zusammen mit stirnseitigen Abschlußwänden 27, 28 einen Innenraum definiert, in dem das die Funktion eines Kolbens übernehmende Betätigungselement 6 axial verschiebbar und in Dichtkontakt mit der Innenfläche des Mittelteils 26 stehend aufgenommen ist. Die vordere Abschlußwand 27 wird von dem mit dem Betätigungselement 6 fest verbundenen stangenförmigen Abtriebsteil 5 verschiebbar durchsetzt. Der zwischen dem Betätigungselement 6 und der rückseitigen Abschlußwand 28 liegende Abschnitt des Innenraumes, nachfolgend als Beaufschlagungskammer 32 bezeichnet, steht mit einem nach außen geführten Fluidkanal 33 in Verbindung, an den sich eine zu einer Druckquell führende Fluidleitung anschließen läßt. Beim Ausführungsbeispiel durchsetzt der Fluidkanal 33 einen Anschlußstutzen 34, auf den sich eine elastische Fluidleitung aufstecken läßt.

Im unbetätigten Zustand ist das Abtriebsteil 5 weitestmöglich eingefahren, und das Betätigungselement 6 nimmt seine an die rückseitige Abschlußwand 28 angenäherte rückwärtige Endstellung ein. Diese wird beim Ausführungsbeispiel durch eine Federeinrichtung 35 definiert, die sich im Innern des Gehäuses 7 zwischen dem Betätigungselement 6 und der vorderen Abschlußwand 27 abstützt. Durch Fluidbeaufschlagung der Beaufschlagungskammer 32 wird das Betätigungselement 6 unter gleichzeitiger Komprimierung der Federeinrichtung 35 zu einer Vorwärtsbewegung veranlaßt, bis es in seiner durch die vordere Abschlußwand 27 definierten vorderen Endstellung angelangt ist. Eine Belüftung der Beaufschlagungskammer 32 hat zur Folge, daß die Federeinrichtung 35 das Betätigungselement 6 in die an der rückseitigen Abschlußwand 28 anliegende rückwärtige Endstellung zurückbewegt. Der Schlitten 8 macht diese Bewegung mit.

Es versteht sich, daß anstelle der beim Ausführungsbeispiel realisierten einfachwirkenden Betätigungsweise der Betätigungseinheit 4 auch eine doppeltwirkende Ausführung möglich wäre, wobei dann beidseits des Betätigungselementes 6 eine aktive Fluidbeaufschlagung des Innenraumes des Gehäuses 7 möglich wäre.

Es wäre ferner denkbar, die Betätigungseinheit 4 in kolbenstangenloser Bauweise auszuführen.

Im Vergleich zu einer Bauform der Schlitten-Antriebsvorrichtung 1, bei der das Vorrichtungsgehäuse 2 gleichzeitig die Funktion des das Betätigungselement 6 umschließenden und führenden Gehäuses 7 bildet, gestattet die separate Ausführung der Betätigungseinheit 4 eine einfache separate Fertigung, wobei zur Endmontage lediglich ein patronenartiges Einführen in die Aufnahme 3 notwendig ist. Eine solche Bauweise ermöglicht gleichzeitig die Realisierung einer kostengünstigen Einstelleinrichtung zur variablen Vorgabe unterschiedlicher Endstellungen des Betätigungselementes 6 mit Bezug zum Vorrichtungsgehäuse 2.

In Abhängigkeit von der Axialposition des Gehäuses 7 ergeben sich variable Axialpositionen der Abschlußwände 27, 28, die für die jeweilige Endstellung des Betätigungselementes 6 zuständig sind. Somit ist durch Positionierung des Gehäuses 7 eine variable Vorgabe zumindest einer Endstellung des Betätigungselementes 6 und somit des Schlittens 8 durchführbar.

Beim Ausführungsbeispiel erfolgt die Positionierung durch eine Schraubbetätigung des Gehäuses 7. Dieses ist beim Ausführungsbeispiel der Fig. 1 an einer axialen Verlängerung 38 der vorderen Abschlußwand 27 mit einem als Außengewinde ausgeführten Gewinde 36 versehen, das in ein als Innengewinde ausgeführtes Gegengewinde 37 des Vorrichtungsgehäuses 2 eingeschraubt ist. Letzteres befindet sich im vorderen Endbereich der Aufnahme 3 in einem im Durchmesser etwas verengten Längenabschnitt derselben.

Bei der Montage wird die Betätigungseinheit 4 mit der Vorderseite voraus in die rückseitig offene Aufnahme 3 eingesteckt bzw. eingeschoben, bis die axiale Verlängerung 38 an dem das Gegengewinde 37 aufweisenden Wandabschnitt des Vorrichtungsgehäuses 2 zur Anlage gelangt. Das Gehäuse 7 ist dann bereits über den größten Teil seiner Länge in der Aufnahme 3 aufgenommen. Anschließend wird das Gehäuse 7 durch Erfassen des rückseitig aus dem Vorrichtungsgehäuse 2 herausragenden Endabschnittes verdreht, so daß das Gewinde 36 und das Gegengewinde 37 in Schraubeingriff gelangen und die Axialposition des Gehäuses 7 fixiert wird. Durch Wahl der Einschraubtiefe läßt sich des weiteren die relative Axialposition zwischen dem Gehäuse 7 und dem Vorrichtungsgehäuse 2 nach Bedarf justieren. Durch Aufschrauben einer Kontermutter 42 auf den an der Vorderseite des Vorrichtungsgehäuses 2 herausragenden Endabschnitt der axialen Verlängerung 38 und durch Verspannen mit dem Vorrichtungsgehäuse 2 läßt sich die eingestellte Position sichern.

Die Aufnahme 3 hat einen kreisförmigen Querschnitt, an den die Außenkontur des Gehäuses 7 angepaßt ist, so daß letzteres zwar verdreht werden kann, gleichzeitig aber auch in Querrichtung vom Vorrichtungsgehäuse 2 gestützt wird.

Die Bauform der Fig. 2 unterscheidet sich von derjenigen der Fig. 1 dadurch, daß sich die axiale Verlängerung 38 an der rückseitigen Abschlußwand 28 befindet und das Gegengewinde 37 dem rückseitigen Endabschnitt der Aufnahme 3 zugeordnet ist. In diesem Falle erfolgt die Einsteckmontage der Betätigungseinheit 4 mit der Rückseite voraus durch die vorderseitige größere öffnung der Aufnahme 3 hindurch. Der Einstellmechanismus ist prinzipiell der gleiche wie bei der Ausführungsform der Fig. 1.

Die Schlitten-Antriebsvorrichtung 1 könnte auch gleichzeitig mit mehreren Betätigungseinheiten 4 ausgestattet sein, die dann zweckmäßigerweise parallel nebeneinanderliegen.

## Patentansprüche

1. Schlitten-Antriebsvorrichtung, mit einem Vorrichtungsgehäuse (2), in dem sich mindestens ein zu einer Linearbewegung antreibbares Betätigungselement (6) befindet, das mit einem Schlitten (8) bewegungsgekoppelt ist, der an der Außenseite des Vorrichtungsgehäuses (2) unter Mitwirkung von Wälzelementen (12) relativ zum Vorrichtungsgehäuse (2) verschiebbar geführt ist, **dadurch gekennzeichnet, daß** die Laufbahnen (17, 18) für die Wälzelemente (12) integraler Bestandteil des Vorrichtungsgehäuses (2) und des Schlittens (8) sind, wobei sowohl das Vorrichtungsgehäuse (2) als auch der Schlitten (8) zumindest im Bereich der mit den Wälzelementen (12) in Kontakt stehenden Laufbahnen (17, 28) über eine Mindest-Materialhärte von 38 HRC (Rockwell-C-Härte) verfügen.

2. Schlitten-Antriebsvorrichtung nach Anspruch 1, **dadurch gekennzeichnet, daß** das Vorrichtungsgehäuse (2) und/oder der Schlitten (8) zumindest in ihren mit den Wälzelementen (12) zusammenarbeitenden Längenabschnitten und vorzugsweise in ihrer Gesamtheit aus Material bestehen, das über die Mindest-Materialhärte verfügt.

3. Schlitten-Antriebsvorrichtung nach Anspruch 1 oder 2, **dadurch gekennzeichnet, daß** das Vorrichtungsgehäuse (2) und/oder der Schlitten (8) aus zumindest im Bereich der Laufbahnen (17, 18) gehärtetem Metallmaterial bestehen.

4. Schlitten-Antriebsvorrichtung nach einem der Ansprüche 1 bis 3, **dadurch gekennzeichnet, daß** zumindest die die Laufbahnen (17, 18) bildenden Bestandteile des Vorrichtungsgehäuses (2) und/oder des Schlittens (8) aus nichtrostendem Stahlmaterial bestehen.

5. Schlitten-Antriebsvorrichtung nach einem der Ansprüche 1 bis 4, **dadurch gekennzeichnet, daß** zumindest die die Laufbahnen (17, 18) bildenden Bestandteile des Vorrichtungsgehäuses (2) und/oder des Schlittens (8) aus ferritischem und/oder martensitischem Stahlmaterial bestehen.

6. Schlitten-Antriebsvorrichtung nach Anspruch 5, **dadurch gekennzeichnet, daß** das Stahlmaterial über einen Kohlenstoffanteil von mindestens 0,4 Gew.% und vorzugsweise maximal 0,5 Gew.% verfügt.

7. Schlitten-Antriebsvorrichtung nach Anspruch 5 oder 6, **dadurch gekennzeichnet, daß** es sich bei dem Stahlmaterial um die Stahlsorte X46 Cr13 handelt.

8. Schlitten-Antriebsvorrichtung nach einem der Ansprüche 1 bis 7, **dadurch gekennzeichnet, daß** die Materialhärte zumindest im Bereich der Laufbahnen (17, 18) zwischen 45 HRC und 60 HRC, je einschließlich, liegt und dabei vorzugsweise 54 HRC beträgt.

9. Schlitten-Antriebsvorrichtung nach einem der Ansprüche 1 bis 8, **dadurch gekennzeichnet, daß** der Schlitten (8) das Vorrichtungsgehäuse (2) mit einem einen U-ähnlichen Querschnitt aufweisenden Führungsabschnitt (14) übergreift, wobei an den einander zugewandten Flanken der Schenkel (16) des Führungsabschnittes (14) erste Laufbahnen (17) vorgesehen sind, denen jeweils eine am übergriffenen Abschnitt des Vorrichtungsgehäuses (2) vorgesehene zweite Laufbahn (18) gegenüberliegt, wobei zwischen zugeordneten Paaren erster und zweiter Laufbahnen (17, 18) die vorzugsweise kugelförmig ausgebildeten Wälzelemente (12) angeordnet sind.

10. Schlitten-Antriebsvorrichtung nach einem der Ansprüche 1 bis 9, **dadurch gekennzeichnet, daß** die Laufbahnen (17, 18) zumindest teilweise von den Innenflächen von Längsnuten gebildet sind.

11. Schlitten-Antriebsvorrichtung nach einem der Ansprüche 1 bis 10, **dadurch gekennzeichnet, daß** das Betätigungselement (6) Bestandteil einer Betätigungseinheit (4) ist, die patronenähnlich in eine sich im Vorrichtungsgehäuse (2) erstreckende Aufnahme (3) eingesetzt ist.

12. Schlitten-Antriebsvorrichtung nach Anspruch 11, **dadurch gekennzeichnet, daß** die Betätigungseinheit (4) ein das Betätigungselement (6) beweglich aufnehmendes Gehäuse (7) besitzt, das zur Vorgabe unterschiedlicher Endstellungen des Betätigungselementes (6) in verschiedenen axialen Relativpositionen mit Bezug zum Vorrichtungsgehäuse (2) positionierbar ist.

13. Schlitten-Antriebsvorrichtung nach Anspruch 12, **dadurch gekennzeichnet, daß** das Gehäuse (7) der Betätigungseinheit (4) mit einem Gewinde (36) versehen ist, über das es mit einem am Vorrichtungsgehäuse (2) vorgesehenen Gegengewinde (37) in axial justierbarer Weise in Schraubeingriff steht.

14. Schlitten-Antriebsvorrichtung nach Anspruch 13, **dadurch gekennzeichnet, daß** das Gewinde (36) im Bereich einer der beiden axial orientierten Stirnseiten des Gehäuses (7) der Betätigungseinheit (4) vorgesehen ist, wobei sich das Gegengewinde (37) im Bereich der Vorder- oder Rückseite des Vorrichtungsgehäuses (2) und dabei zweckmäßigerweise innerhalb der Aufnahme (3) befindet.

15. Schlitten-Antriebsvorrichtung nach einem der Ansprüche 1 bis 14, **dadurch gekennzeichnet, daß** sie in fluidbetätigter Bauart ausgeführt ist.

16. Schlitten-Antriebsvorrichtung nach Anspruch 15 in Verbindung mit einem der Ansprüche 11 bis 14, **dadurch gekennzeichnet, daß** die Betätigungseinheit (4) nach Art eines fluidbetätigten Arbeitszylinders ausgebildet ist, dessen Kolben das Betätigungselement (6) bildet.

17. Schlitten-Antriebsvorrichtung nach einem der Ansprüche 1 bis 16, **dadurch gekennzeichnet, daß** das Vorrichtungsgehäuse (2) einen im Querschnitt trapezähnlich gestalteten Fußabschnitt (24) und einen dem Schlitten (8) zugeordneten, im Querschnitt rechteckähnlich gestalteten Rückenabschnitt (15) aufweist.

## Claims

1. Slide drive unit with a unit housing (2) in which is located at least one actuating element (6) which may be driven to make a linear movement and is movement-coupled to a slide (8) which is slidably guided on the outside of the unit housing (2) relative to the unit housing (2) with the cooperation of roller elements (12), **characterised in that** the tracks (17, 18) for the roller elements (12) are an integral part of the unit housing (2) and the slide (8), wherein both the unit housing (2) and the slide (8) have a minimum material hardness of 38 HRC (Rockwell C hardness) at least **in that** area of the tracks (17, 18) which is in contact with the roller elements (12).

2. Slide drive unit according to claim 1, **characterised in that** the unit housing (2) and/or the slide (8) are made of material with more than the minimum material hardness, at least in their sections of length which work together with the roller elements (12) and preferably in their totality.

3. Slide drive unit according to claim 1 or 2, **characterised in that** the unit housing (2) and/or the slide (8) are made of hardened metal material, at least in the area of the tracks (17,18).

4. Slide drive unit according to any of claims 1 to 3, **characterised in that** at least the parts of the unit housing (2) and/or the slide (8) forming the tracks (17, 18) are made of non-rusting steel material.

5. Slide drive unit according to any of claims 1 to 4, **characterised in that** at least the parts of the unit housing (2) and/or the slide (8) forming the tracks (17, 18) are made of ferritic and/or martensitic steel material.

6. Slide drive unit according to claim 5, **characterised in that** the steel material has a carbon content of at least 0.4 % by weight and preferably a maximum of 0.5 % by weight.

7. Slide drive unit according to claim 5 or 6, **characterised in that** the steel material is of type X46 Cr13.

8. Slide drive unit according to any of claims 1 to 7, **characterised in that** the material hardness at least in the area of the tracks (17, 18) lies between 45 HRC and 60 HRC, each inclusive, and is preferably 54 HRC.

9. Slide drive unit according to any of claims 1 to 8, **characterised in that** the slide (8) overlaps the unit housing (2) with a guide section (14) having a U-shaped cross-section, wherein first tracks (17) are provided on facing flanks of the legs (16) of the guide section (14) and opposite each of which a second track (18) is provided on the overlapped section of the unit housing (2), while the preferably spherical roller elements (12) are arranged between assigned pairs of first and second tracks (17, 18).

10. Slide drive unit according to any of claims 1 to 9, **characterised in that** the tracks (17, 18) are formed at least partly by the inner faces of longitudinal slots.

11. Slide drive unit according to any of claims 1 to 10, **characterised in that** the actuating element (6) is part of an actuating unit (4) which is inserted like a cartridge into a receptacle (3) extending in the unit housing (2).

12. Slide drive unit according to claim 11, **characterised in that** the actuating unit (4) has a housing (7) holding the actuating element (6) with movement facility which, to preset different end positions of the actuating element (6), may be brought into different axial relative positions with reference to the unit housing (2).

13. Slide drive unit according to claim 12, **characterised in that** the housing (7) of the actuating unit (4) is provided with a thread (36), via which it is in screwed engagement with a mating thread (37) provided on the unit housing (2), in an axially adjustable manner.

14. Slide drive unit according to claim 13, **characterised in that** the thread (36) is provided in the area of one of the two axially-aligned end faces of the housing (7) of the actuating unit (4), while the mating thread (37) is located in the area of the front or rear side of the unit housing (2) and at the same time expediently within the receptacle (3).

15. Slide drive unit according to any of claims 1 to 14, **characterised in that** it is of fluid-actuated design.

16. Slide drive unit according to claim 15 in combination with any of claims 11 to 14, **characterised in that** the actuating unit (4) is in the form of a fluid-actuated operating cylinder, the piston of which forms the actuating element (6).

17. Slide drive unit according to any of claims 1 to 16, **characterised in that** the unit housing (2) has a base section (24) which is trapezoidal in cross-section, and a rear section (15) which is rectangular in cross-section and assigned to the slide (8).

## Revendications

1. Mécanisme moteur à chariot, avec un carter (2) dans lequel se trouve au moins un élément d'actionnement (6) actionnable suivant un mouvement linéaire, qui est couplé par mouvement à un chariot (8) qui est guidé, de manière mobile, du côté externe du carter (2), avec le concours d'éléments de roulement (12), relativement au carter (2), **caractérisé en ce que** les voies de roulement (17, 18) pour les éléments de roulement (12) font partie intégrante du carter (2) et du chariot (8), le carter (2) ainsi que le chariot (8) disposant, au moins au niveau des voies de roulement (17, 28) en contact avec les éléments de roulement (12), d'une dureté minimale de matériau de 38 HRC (dureté Rockwell C).

2. Mécanisme moteur à chariot selon la revendication 1, **caractérisé en ce que** le carter (2) et/ou le chariot (8) sont composés, au moins dans leurs tronçons longitudinaux coopérant avec les éléments de roulement (12) et, de préférence, dans leur globalité, d'un matériau qui dispose de la dureté de matériau minimale.

3. Mécanisme moteur à chariot selon la revendication 1 ou 2, **caractérisé en ce que** le carter (2) et/ou le chariot (8) sont composés, au moins au niveau de leurs voies de roulement (17, 18), d'un matériau métallique trempé.

4. Mécanisme moteur à chariot selon l'une des revendications 1 à 3, **caractérisé en ce qu'**au moins les parties intégrantes du carter (2) et/ou du chariot (8) formant les voies de roulement (17, 18) sont composées d'un matériau en acier inoxydable.

5. Mécanisme moteur à chariot selon l'une des revendications 1 à 4, **caractérisé en ce qu'**au moins les parties intégrantes du carter (2) et/ou du chariot (8) formant les voies de roulement (17, 18) sont composées d'un matériau en acier ferritique et/ou martensitique.

6. Mécanisme moteur à chariot selon la revendication 5, **caractérisé en ce que** le matériau en acier comprend une fraction de carbone d'au moins 0,4 % du poids et, de préférence, 0,5 % du poids au maximum.

7. Mécanisme moteur à chariot selon la revendication 5 ou 6, **caractérisé en ce que** le matériau en acier est du type d'acier X46 Cr13.

8. Mécanisme moteur à chariot selon l'une des revendications 1 à 7, **caractérisé en ce que** la dureté du matériau se situe entre 45 HRC et 60 HRC, ces deux valeurs étant elles-mêmes incluses, au moins au niveau des voies de roulement (17, 18), et s'élève à ce sujet de préférence à 54 HRC.

9. Mécanisme moteur à chariot selon l'une des revendications 1 à 8, **caractérisé en ce que** le chariot (8) dépasse le carter (2) par un tronçon de guidage (14) présentant une coupe transversale similaire à un U, au niveau des flancs tournés les uns vers les autres des montants (16) du tronçon de guidage (14), des premières voies de roulement (17) étant prévues, à chacune desquelles fait respectivement face une deuxième voie de roulement (18) prévue au niveau du tronçon, dépassant, du carter (2), les éléments de roulement (12), configurés de préférence en forme de sphère, étant disposés entre des paires attribuées de la première et de la deuxième voies de roulement (17, 18).

10. Mécanisme moteur à chariot selon l'une des revendications 1 à 9, **caractérisé en ce que** les voies de roulement (17, 18) sont formées, au moins partiellement, par des surfaces internes des rainures longitudinales.

11. Mécanisme moteur à chariot selon l'une des revendications 1 à 10, **caractérisé en ce que** l'élément d'actionnement (6) fait partie intégrante d'une unité d'actionnement (4) qui est insérée, de manière similaire à une cartouche, dans un logement (3) s'étendant dans le carter (2).

12. Mécanisme moteur à chariot selon la revendication 11, **caractérisé en ce que** l'unité d'actionnement (4) possède un carter (7) logeant de manière mobile l'élément d'actionnement (6), carter qui peut être positionné, pour la prédéfinition de diverses positions finales de l'élément d'actionnement (6), dans différentes positions relatives axiales, par rapport au carter (2).

13. Mécanisme moteur à chariot selon la revendication 12, **caractérisé en ce que** le carter (7) de l'unité d'actionnement (4) est muni d'un filet (36) par le biais duquel il est en prise par vis, ajustable de manière axiale, avec un contre-filet (37) prévu au niveau du carter (2).

14. Mécanisme moteur à chariot selon la revendication 13, **caractérisé en ce que** le filet (36) est prévu au niveau de l'une des deux faces frontales, orientées de manière axiale, du carter (7) de l'unité d'actionnement (4), le contre-filet (37) se trouvant au niveau de la face avant ou arrière du carter (2) et, de manière pratique, à l'intérieur du logement (3).

15. Mécanisme moteur à chariot selon l'une des revendications 1 à 14, **caractérisé en ce qu'**il est réalisé suivant un mode de construction actionné par fluide.

16. Mécanisme moteur à chariot selon la revendication 15 en liaison avec l'une des revendications 11 à 14, **caractérisé en ce que** l'unité d'actionnement (4) est configurée à mode de cylindre de travail actionné par fluide, dont le piston forme l'élément d'actionnement (6).

17. Mécanisme moteur à chariot selon l'une des revendications 1 à 16, **caractérisé en ce que** le carter (2) présente un tronçon de base (24) conformé de manière similaire à un trapèze dans la coupe transversale et un tronçon arrière (15), attribué au chariot (8), configuré de manière similaire à un rectangle dans la coupe transversale.
